# DEMANDE DE BREVET EUROPEEN

(11) **EP 2 562 033 A1**
(43) Date de publication de la demande: **27.02.2013**
(21) Numéro de dépôt: 12177649.6
(22) Date de dépôt: 24.07.2012
(51) Int. Cl.: B60N 2/30

(54) **Siège escamotable de véhicule**

(30) Priorité: 22.08.2011 FR 1157437
(71) Demandeur: PEUGEOT CITROËN AUTOMOBILES SA, 78140 Velizy-Villacoublay (FR)
(72) Inventeur: Dutot, Christophe, 94400 VITRY SUR SEINE (FR)

(57) **Abrégé**

Siège escamotable de véhicule comprenant :
- un dossier (3) fixé à un bâti (2) du véhicule et
- une assise (4), fixée au dossier (3) par un mécanisme de pivot (5), apte à être pivotée entre une position dépliée et une position repliée vers le dossier (3), caractérisé en ce que le dossier (3) est fixé de manière mobile au bâti (2) et est apte à être déplacé entre une position basse et une position haute, et en ce que le siège comprend des moyens de butée (9a) sur le bâti (2) aptes à être en butée sur le bâti (2) lorsque le dossier (3) est en position haute pour maintenir l'assise (4) en position repliée.

## Description

La présente invention concerne de manière générale un siège escamotable monté sur un véhicule automobile.

De nos jours, les véhicules peuvent avoir différents types d'utilisation. En effet, un même véhicule peut servir à transporter des passagers ou des marchandises ou les deux à la fois. En conséquence, la modularité des véhicules, et plus particulièrement de leurs sièges, est un facteur important pour les utilisateurs. Il a donc été requis de fournir des véhicules comprenant des sièges escamotables aptes à être disposés dans une première position afin d'accueillir des passagers avec un confort maximal et aptes à être disposés dans une seconde position de manière à être escamotés pour optimiser le volume libre du véhicule de sorte que ce dernier puisse transporter un maximum de marchandises.

Il est connu dans l'art antérieur des sièges escamotables comprenant un dossier apte à être rabattu vers le bas sur une assise de manière à libérer un espace en hauteur. Un inconvénient de ce type de siège est qu'il ne permet qu'un chargement sur le siège, ce qui peut endommager celui-ci lorsque les marchandises sont lourdes. Par ailleurs, la stabilité d'un élément stocké sur un dossier de siège est inférieure à celle d'un élément posé sur le plancher du véhicule. Finalement, il est préférable que l'espace libéré soit le plus bas possible afin de limiter les efforts de chargement, ainsi plutôt que d'abaisser les dossiers des sièges il a été trouvé avantageux d'élever les assises et leurs pieds afin de libérer un espace au plancher plutôt que sur le siège.

Il existe donc des sièges comprenant une assise apte à être rabattue contre son dossier afin de libérer de l'espace au plancher.

Plus particulièrement, le document EP 1 406 786 décrit un siège monté dans un véhicule automobile comprenant un dossier solidaire d'un bâti, une assise repliable et une béquille rabattable contre l'assise. Le siège comprend en outre un mécanisme de maintien apte à maintenir l'assise en position repliée lorsque la béquille est rabattue contre l'assise. Ce mécanisme est commandé par la béquille de sorte que lorsque la béquille est mise en position de support, c'est-à-dire substantiellement perpendiculaire à l'assise, le mécanisme est libéré de manière à ce que l'assise puisse être dépliée. Cependant, ce siège ne permet pas de libérer beaucoup de place sous le siège. De plus, le mécanisme de maintien consiste en un crochet lié à l'assise qui s'engage dans une cavité prévue dans un élément lié au dossier qui, sous l'effet des forces d'accélération et de freinage répétées du véhicule, peut en être libéré et ainsi ne plus maintenir l'assise en position repliée.

Il est donc nécessaire de fournir un siège escamotable apte à pouvoir être escamoté de manière à libérer un plus grand espace au plancher et disposant d'un mécanisme de maintien plus fiable afin d'éviter que le siège n'abime les marchandises stockées en dessous.

Le document US 6 695 378 décrit un siège ajustable pour un véhicule de petite taille comprenant un dossier dont la position est ajustable et une assise non ajustable susceptible d'être pivotée sur le côté de manière à donner accès à un compartiment fermé situé sous le siège. Le dossier est ajustable en profondeur, c'est-à-dire apte à être déplacé vers l'avant ou l'arrière du véhicule, et simultanément en hauteur. Un inconvénient de ce siège est qu'il dispose d'une assise non ajustable. Le siège décrit par ce document n'est donc absolument pas pensé pour pouvoir libérer de la place au plancher. En effet, son but est de procurer un espace maximal au passager et donc l'espace libre disponible au plancher est quasi inexistant à cause notamment du compartiment situé sous l'assise. Ainsi, bien que ce siège dispose d'un mécanisme permettant d'élever le dossier, il ne permet en aucune façon de libérer de l'espace au plancher.

Un but de la présente invention est de répondre aux inconvénients des documents de l'art antérieur mentionnés ci-dessus et en particulier, tout d'abord, de proposer un siège apte à pouvoir être escamoté de manière à libérer un grand espace au plancher avec un maintien dans sa position escamotée fiable et économique afin d'éviter que le siège n'abime les marchandises stockées en dessous, dans l'espace libéré.

Pour cela un premier aspect de l'invention concerne un siège escamotable de véhicule comprenant :
- un dossier fixé à un bâti du véhicule et
- une assise, fixée au dossier par un mécanisme de pivot, apte à être pivotée entre une position dépliée et une position repliée vers le dossier, **caractérisé en ce que** le dossier est fixé de manière mobile au bâti et est apte à être déplacé entre une position basse et une position haute, et en ce que le siège comprend des moyens de butée agencés pour être mis en butée sur le bâti lorsque le dossier est en position haute pour maintenir l'assise en position repliée. La présente invention offre un siège apte à libérer un espace important au plancher et sécurise la position de l'assise embarquée avec le dossier de manière économique avec les moyens de butée, qui entrent en butée mécanique avec le bâti pour maintenir l'assise en position repliée, une fois que le dossier est déplacé en position haute, sans mécanisme supplémentaire coûteux.

Une réalisation particulièrement intéressante consiste en ce que des moyens de liaison fixés à une béquille escamotable de l'assise sont agencés pour provoquer le rabattement de la béquille sur l'assise lors du pivotement de l'assise vers sa position repliée et en ce que les moyens de butée font partie des moyens de liaison. Cette mise en oeuvre permet d'offrir un siège robuste avec une béquille et simple à utiliser, car la béquille s'escamote lors du pivotement de l'assise vers la position repliée. L'ergonomie est bonne car l'utilisateur n'a pas à escamoter la béquille, cela est effectué par le pivotement de l'assise grâce aux moyens de liaison. Enfin, l'intégration des moyens de butée avec les moyens de liaison limite le nombre de composants et assure une mise en oeuvre économique.

Avantageusement, les moyens de butée sont mobiles par rapport au dossier et à l'assise, et les moyens de butée sont pré-positionnés par le pivotement de l'assise vers sa position repliée pour être aptes à être en butée sur le bâti lorsque le dossier est en position haute. L'invention tire astucieusement parti de la cinématique de mise en position repliée de l'assise pour positionner les moyens de butée de sorte à ce qu'ils entrent en butée mécanique avec le bâti lorsque le dossier est mis en position haute. Il n'y a pas de commande spécifique à manipuler par l'utilisateur pour pré-positionner les moyens de butée, car c'est le pivotement de l'assise qui provoque cette opération.

Avantageusement, les moyens de liaison sont fixés au dossier. Cette mise en oeuvre offre une conception simple : les moyens de butée sont directement embarqués sur le dossier. Le châssis du véhicule n'a pas à être modifié si cette option de siège escamotable est proposée.

Avantageusement, les moyens de liaison sont une bielle fixée au dossier par un premier pivot et à la béquille escamotable par un deuxième pivot. Les liaisons pivot proposées sont économiques à réaliser.

Avantageusement, les moyens de butée sont une patte d'appui agencée à une extrémité de la bielle. Cette mise en oeuvre permet de limiter les efforts supportés par les composants du siège, en agissant sur les bras de levier.

Avantageusement, le dossier est maintenu en position haute par des moyens de maintien. L'invention tire parti de la présence des moyens de maintien du dossier : il n'y a pas de moyens spécifiques pour l'assise : une fois le dossier maintenu en position haute par les moyens de maintien, la position repliée de l'assise est garantie par les moyens de butée qui sont en butée mécanique sur le bâti.

Très avantageusement, le dossier est verrouillé en position haute par des moyens de verrouillage. Cette mise en oeuvre crée une synergie entre les moyens de verrouillage du dossier et les moyens de butée. Ces derniers deviennent eux-mêmes des moyens de verrouillage de l'assise, car les moyens de butée sur le bâti sont eux-mêmes verrouillés par le dossier.

Avantageusement, la bielle est un tube coudé. Ce composant est économique à fabriquer.

Un second aspect de l'invention est un véhicule automobile comprenant au moins un siège selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un siège selon l'invention en position normale d'utilisation ;
- la figure 2 représente le siège de la figure 1 avec l'assise repliée vers le dossier en position basse ;
- la figure 3 représente le siège de la figure 1 avec l'assise repliée vers le dossier en position haute.

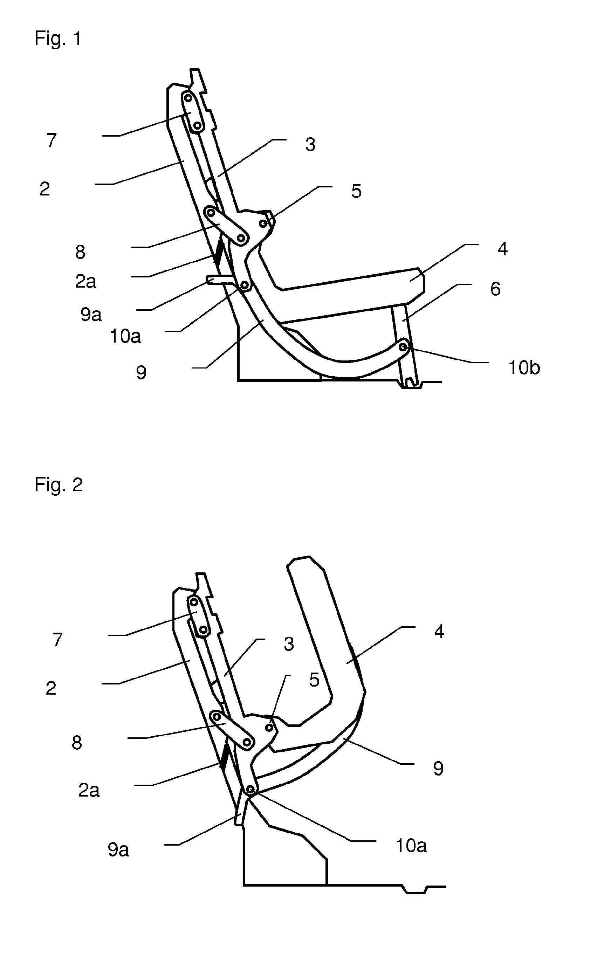

La figure 1 représente un siège selon l'invention avec une assise 4 reliée par un pivot 5 à un dossier 3. L'assise comprend une béquille 6 qui repose sur le sol et supporte le poids de l'assise 4 et éventuellement celui d'un passager assis sur le siège. Le dossier 3 est relié à un bâti 2 par l'intermédiaire de deux bielles : une bielle inférieure 8 et une bielle supérieure 7. Enfin, une bielle 9 lie le dossier par un premier pivot 10a avec la béquille 6 par un deuxième pivot 10b.

La figure 2 représente le siège avec l'assise 4 repliée vers le dossier 3 en position basse. A cet effet, l'assise 4 a pivoté autour de l'axe de pivot 5 pour aller de la position normale d'utilisation horizontale vers la position repliée verticale vers le dossier 3. Dans le même temps, la bielle 9 qui lie le dossier 3 à la béquille 6 force cette dernière à se rabattre vers l'assise 4. Le mouvement de pivotement de l'assise 4 autour de l'axe 5 et le rabattement de la bielle 6 sont liés, de sorte que le siège selon l'invention est ergonomique à utiliser.

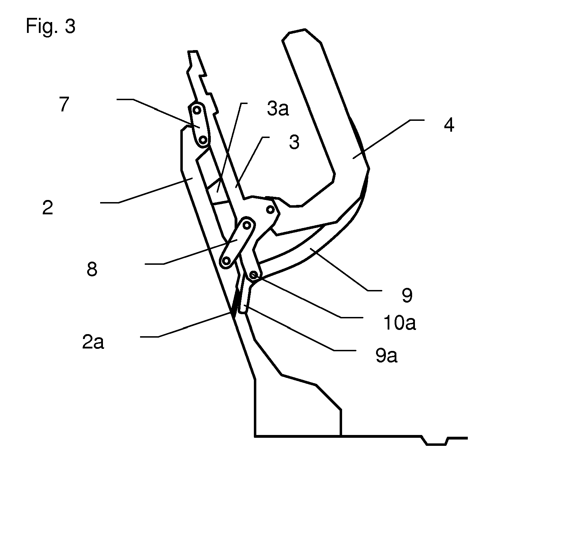

La figure 3 représente le siège complètement escamoté vers le haut.

A cet effet, l'assise 4 étant repliée vers le dossier 3, celui-ci peut passer de la position basse telle que représenté à la figure 2, vers la position haute, grâce au parallélogramme déformable formé par le bâti 2, les bielles inférieure et supérieure 7 et 8, et par le dossier 3 lui-même. Un mécanisme 3a de maintien en place et de verrouillage force le dossier 3 à rester en position haute. Par ailleurs, une patte d'appui 9a est agencée à l'extrémité de la bielle 9 et à l'opposé du deuxième pivot 10b. Cette butée 9a forme une excroissance de la bielle 9 et vient en butée mécanique avec une partie 2a du bâti, pour maintenir l'assise 4 en position repliée vers le dossier 3. En synergie avec le mécanisme 3a de maintien et de verrouillage du dossier 3, la patte d'appui 9a forme aussi un moyen de maintien et de verrouillage de l'assise 4 en position repliée vers le dossier 3.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un bâti qui supporte le dossier, mais on peut envisager de fixer le dossier directement au châssis du véhicule. En ce qui concerne les moyens de maintien et de verrouillage du dossier dans la position haute, on peut envisager d'utiliser des mécanismes à cliquet, à barre de torsion ou à doigts d'indexage.

## Revendications

1. Siège escamotable de véhicule comprenant :
- un dossier (3) fixé à un bâti (2) du véhicule et
- une assise (4), fixée au dossier (3) par un mécanisme de pivot (5), apte à être pivotée entre une position dépliée et une position repliée vers le dossier (3), **caractérisé en ce que** le dossier (3) est fixé de manière mobile au bâti (2) et est apte à être déplacé entre une position basse et une position haute, et **en ce que** le siège comprend des moyens de butée (9a) agencés pour être mis en butée sur le bâti (2) lorsque le dossier (3) est en position haute pour maintenir l'assise (4) en position repliée.

2. Siège escamotable selon la revendication 1, **caractérisé en ce que** des moyens de liaison (9) fixés à une béquille (6) escamotable de l'assise (4) sont agencés pour provoquer le rabattement de la béquille (6) sur l'assise (4) lors du pivotement de l'assise (4) vers sa position repliée et **en ce que** les moyens de butée (9a) font partie des moyens de liaison (9).

3. Siège escamotable selon l'une des revendications 1 ou 2, **caractérisé en ce que** les moyens de butée (9a) sont mobiles par rapport au dossier (3) et à l'assise (4), et **en ce que** les moyens de butée (9a) sont pré-positionnés par le pivotement de l'assise (4) vers sa position repliée pour être aptes à être en butée sur le bâti (2) lorsque le dossier (3) est en position haute.

4. Siège escamotable selon l'une des revendications 2 à 3, **caractérisé en ce que** les moyens de liaison sont fixés au dossier (3).

5. Siège escamotable selon la revendication 2 à 4, **caractérisé en ce que** les moyens de liaison sont une bielle (9) fixée au dossier (3) par un premier pivot (10a) et à la béquille (6) escamotable par un deuxième pivot (10b).

6. Siège escamotable selon la revendication 5, **caractérisé en ce que** les moyens de butée (9a) sont une patte d'appui agencée à une extrémité de la bielle (9).

7. Siège escamotable selon l'une des revendications 1 à 6, **caractérisé en ce que** le dossier (3) est maintenu en position haute par des moyens de maintien.

8. Siège escamotable selon l'une des revendications 1 à 7, **caractérisé en ce que** le dossier (3) est verrouillé en position haute par des moyens de verrouillage (3a).

9. Siège escamotable selon l'une des revendications 1 à 8, **caractérisé en ce que** la bielle (9) est un tube coudé.

10. Véhicule automobile comprenant au moins un siège selon l'une des revendications 1 à 9.
